# FASCICULE DE BREVET EUROPEEN

(11) **EP 2 139 725 B1**
(45) Date de publication et mention de la délivrance du brevet: **22.09.2010**
(21) Numéro de dépôt: 08788122.3
(22) Date de dépôt: 03.04.2008
(51) Int. Cl.: B60R 13/02

(54) **AGENCEMENT D'UN PANNEAU DE GARNITURE D'UNE PORTE DE VEHICULE AUTOMOBILE**
VERKLEIDUNGSTAFELANORDNUNG FÜR AUTOMOBILTÜREN
TRIMMING PANEL ARRANGEMENT FOR THE DOOR OF AN AUTOMOBILE

(30) Priorité: 04.04.2007 FR 0702464
(43) Date de publication de la demande: 06.01.2010
(73) Titulaire: Renault SAS, 92100 Boulogne Billancourt (FR)
(72) Inventeur: HOLLEVILLE, Francis, F-78470 St Remy Les Chevreuse (FR); HUDRY, Efflam, F-75013 Paris (FR)
(86) Numéro de dépôt international: PCT/FR2008/050599
(87) Numéro de publication internationale: WO 2008/139094

(56) Documents cités:
- JP-A- 60 121 114
- US-A- 5 531 499
- US-A1- 2004 239 151

## Description

La présente invention concerne un agencement d'un panneau de garniture sur une porte ou portière de véhicule automobile.

Le document EP 1 686 011 décrit une portière de véhicule automobile qui comprend un caisson métallique sur lequel est collé un joint rigide et un panneau de garniture, qui correspond à la face de la porte, située dans l'habitacle, quand la portière est montée sur un véhicule automobile, qui est fixé sur ce joint.

Le panneau de garniture comporte une face de fixation qui est fixée sur le joint. Cette face de fixation comporte des éléments de fixation situés en haut et en bas du panneau de garniture. Ces éléments de fixation comportent une portion sensiblement tubulaire, disposée sur la face de fixation, et sensiblement perpendiculaire à cette dernière. Cette portion tubulaire est insérée dans une ouverture ménagée dans le joint. Une collerette, formée à l'extrémité libre de la portion tubulaire, permet de retenir le panneau de garniture sur le joint.

Il est également connu de munir le panneau de garniture de premier éléments de fixation qui sont situés sur ces deux bords latéraux et qui coopèrent avec des premiers moyens de réception disposés sur le caisson. Des seconds éléments de fixation et des seconds moyens de réception équipent alors le bord inférieur, respectivement du panneau et du caisson. Le panneau de garniture et le caisson comportent, en outre, des moyens de positionnement qui sont situés sur leur bord supérieur.

Le montage du panneau de garniture sur le caisson est mis en oeuvre de la façon suivante. On bloque tout d'abord la position du panneau de garniture au niveau de son bord supérieur, sur le caisson. On fixe ensuite le panneau sur le caisson, au niveau des bords latéraux. Puis on vient fixer le panneau au niveau de son bord inférieur. Or, il s'avère que le blocage en position, réalisé par les moyens de positionnement précités, n'est pas suffisant et il est très difficile de réaliser la fixation du panneau de garniture au niveau de son bord inférieur. Le temps de montage est ainsi considérablement augmenté car il faut repositionner correctement le panneau de garniture par rapport au caisson. Si le positionnement n'est pas correct, le panneau peut, parfois, tout de même, être fixé sur le caisson mais, dans ce cas, la portière ne répond pas aux normes de sécurité passive ou bien risque de présenter des défauts d'étanchéité, car la fixation de son bord inférieur est incorrecte.

Un agencement selon le préambule de la revendication 1 est connu du document JP 60 12 11 14 A.

Un but de la présente invention est de proposer une portière qui ne présente pas les inconvénients précités.

Ce but est atteint au moyen d'un agencement d'un panneau de garniture sur un caisson de porte de véhicule automobile, dans lequel ledit panneau comporte une face de fixation, fixée sur ledit caisson et qui comprend deux bords latéraux, équipés de premiers éléments de fixation qui coopèrent avec des premiers moyens de réception dudit caisson et un bord inférieur, équipé de seconds éléments de fixation qui coopèrent avec des seconds moyens de réception du caisson. Selon l'invention, les seconds éléments de fixation du panneau et les seconds moyens de réception du caisson forment, en outre, des moyens d'indexation en partie basse, de manière à caler, lors de son montage ledit panneau de garniture, en position sur ledit caisson.

Ainsi, le calage c'est-à-dire l'indexage du panneau de garniture, peut être réalisé également en partie basse de ce dernier. L'indexage peut être réalisé, par exemple, par l'intermédiaire de reliefs complémentaires qui coopèrent de manière à caler en position le panneau de garniture. L'emboîtement ou tout autre coopération des reliefs permet de réaliser facilement cet indexage.

L'indexage peut s'effectuer au niveau des seconds moyens de réception du caisson, ou des seconds éléments de fixation du panneau de garniture, ce qui permet de ne pas modifier le caisson existant, seul le panneau de garniture et les seconds moyens de réception devant être modifiés.

Selon un premier mode de réalisation, les seconds moyens de réception dudit caisson comportent :
- un élément formant cheville, qui comporte un corps, sensiblement tubulaire, qui est muni d'un alésage interne longitudinal, qui comporte à sa première extrémité une tête, qui entoure la section transversale dudit alésage, et qui est inséré dans une ouverture, ménagée dans ladite première face dudit caisson ; ladite tête prend appui au niveau des bords de ladite ouverture et dépasse au-dessus de ladite première face dudit caisson ; et lesdits seconds éléments de fixation dudit panneau de garniture comportent :
- un capuchon, sensiblement tubulaire, disposé sur ladite face de fixation et qui entoure ladite tête dudit élément formant cheville ; et
- un élément de liaison qui traverse ledit panneau de garniture et coopère avec ledit alésage dudit élément formant cheville.

L'élément de liaison peut être, par exemple, du type vis ou boulon.

Un film d'étanchéité peut recouvrir ladite première face dudit caisson, excepté une zone basse, située au niveau du bord inférieur dudit caisson. Dans ce cas, lesdits seconds moyens de réception dudit caisson sont disposés dans ladite zone basse. Ce qui permet de mettre le film à l'abri de toute fausse manoeuvre qui pourrait le transpercer. De plus, il n'y a ainsi pas d'autre moyen d'étanchéité à prévoir au niveau des seconds moyens de réception et des seconds éléments de fixation.

Les premiers moyens de réception et les premiers éléments de fixation ne sont pas limités selon l'invention. Ainsi, selon un mode de réalisation particulier, lesdits premiers moyens de réception du caisson comportent des ouvertures et lesdits premiers éléments de fixation dudit panneau de garniture sont clippés dans lesdites ouvertures.

La présente invention, ses caractéristiques et les différents avantages qu'elle procure seront mieux compris à la lecture de la description qui suit d'un mode de réalisation, présenté à titre d'exemple non limitatif, et qui fait référence aux dessins annexés, sur lesquels :
- la figure 1 représente une vue de face du panneau de garniture d'une portière de véhicule automobile selon l'invention ; et
- la figure 2 représente une vue en coupe transversale des seconds éléments de fixation et des seconds moyens de réception de la portière de la figure 1.

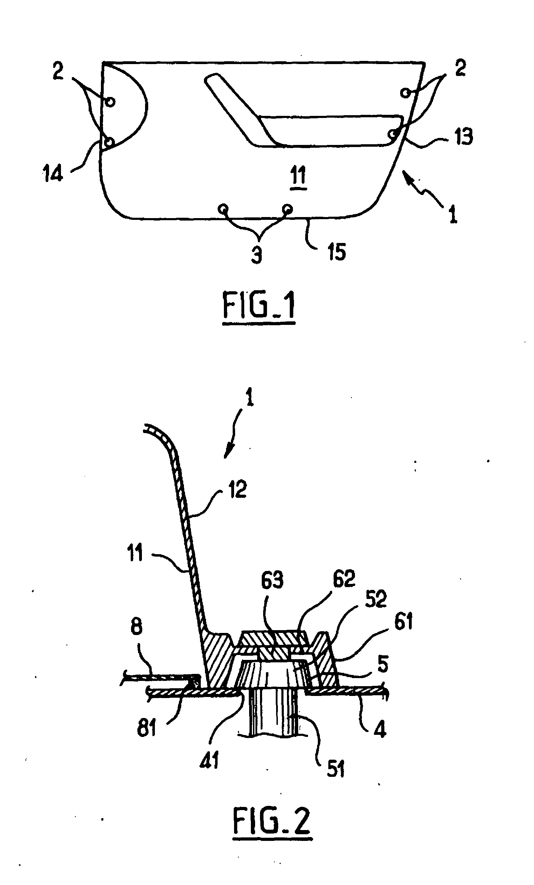

En référence à la figure 1, le panneau de garniture 1 comporte une face décorative 12 (visible sur la figure 2), qui est visible depuis l'habitacle du véhicule, lorsque la portière est montée sur un véhicule automobile et une face de fixation 11 qui est opposée à la face décorative et qui est fixée sur un caisson 4 de portière. La face de fixation comporte deux bords latéraux 13 et 14 et un bord inférieur 15. Le bord inférieur 15 est défini comme étant le bord qui est disposé près du plancher du véhicule, lorsque la portière est montée sur un véhicule automobile. Les deux bords latéraux 13 et 14 comportent des premiers éléments de fixation 2 qui sont aptes à être clippés dans le caisson 4. Le bord inférieur 15 du panneau de garniture 1 comporte des seconds éléments de fixation qui seront plus amplement décrits en référence à la figure 2.

En référence à la figure 2, le caisson 4 sur lequel est fixé le panneau de garniture 1, comporte une ouverture 41. Un élément formant cheville 5 est inséré dans cette ouverture 41. L'élément 5 peut par exemple être inséré par clippage. Cet élément formant cheville 5 comporte un corps tubulaire 51, muni d'un alésage interne. Une extrémité de ce corps tubulaire 51 comporte une tête 52 qui prend appui sur le caisson au niveau des bords de l'ouverture 41. La tête 52 dépasse au-dessus du caisson 4 et forme une protubérance. Cette tête 52 forme une collerette épaisse qui entoure la section de l'alésage interne du corps tubulaire et s'étend selon un plan perpendiculaire à la direction longitudinale de ce dernier. La tête 52 n'empêche donc pas l'insertion d'une vis ou d'un boulon dans l'alésage interne du corps tubulaire 51. Le panneau de garniture 1 comporte, au niveau de sa face de fixation 11, des seconds éléments de fixation qui comprennent dans le cas présent, un capuchon ou portion sensiblement tubulaire 61, qui entoure la tête 52 de l'élément formant cheville 5 et qui s'étend depuis la face de fixation 11 vers le caisson 4, c'est-à-dire dans une direction sensiblement perpendiculaire à la portion de face de fixation qui est située en regard de l'élément formant cheville 5. Le fond 62 de la portion tubulaire est donc, au moins partiellement, fermé par le panneau de garniture 1, tandis que son extrémité ouverte coopère avec la tête 52 de l'élément formant cheville 5. Les seconds éléments de fixation comportent également une vis 63, qui est vissée à travers le panneau de garniture 1. Ce vissage peut être réalisé, en force, en perçant, lors du vissage le fond 62 de la portion tubulaire. Il est également possible de prévoir une ouverture dans le fond 62 de la portion tubulaire 61. Dans ce cas, cette ouverture doit être adaptée pour que la tête de la vis 63 prenne appui sur la seconde face 12 du panneau de garniture 1, qui est opposée à la face de fixation 11. Un boulon et un écrou peuvent également être utilisés à la place de la vis 63. Le caisson 4 est recouvert d'un film d'étanchéité 8 qui est collé sur le caisson 4 par un boudin de colle 81. Ce film s'étend sous le panneau de garniture 1. L'élément formant cheville 5 est disposé dans le caisson 4 au niveau de la zone périphérique du bord inférieure du caisson encore appelée « zone basse » qui n'est pas recouverte par le film étanchéité 8. Dans le cas présent, le capuchon 61 est disposé au niveau du bord inférieur du panneau de garniture 1 et forme une sorte de patte dépassant de ce bord, ce qui permet de fixer le panneau de garniture 1 dans une zone où ne se trouve pas le film d'étanchéité. Ceci permet donc de préserver ce film de tout risque de perforation.

Le montage du panneau de garniture est mis en oeuvre de la manière suivante. Après avoir fixé le panneau de garniture 1 au niveau de ses deux bords latéraux, l'opérateur tire sur le panneau 1 pour amener le capuchon 61 au dessus de la tête 52 de l'élément formant cheville 5. Le capuchon 61 s'emboîte alors sur la tête 52 ce qui permet une indexation du bord inférieur du panneau et ainsi la fixation du panneau de garniture 1 sur le caisson 2. L'opérateur n'a plus qu'à visser la vis 63 à travers le fond 52 du capuchon 61, dans l'alésage interne de l'élément formant cheville 5. Ce vissage est très facile et très rapide car le panneau de garniture 1 est parfaitement positionné. Le vissage correct du panneau évite ainsi les défauts d'étanchéité et de maintien du panneau. De plus, le film d'étanchéité 8 ne peut pas être perforé.

## Revendications

1. Agencement d'un panneau de garniture (1) sur un caisson (4) de porte de véhicule automobile, dans lequel ledit panneau (1) comporte une face de fixation (11), fixée sur ledit caisson (4) et qui comprend deux bords latéraux (13, 14) équipés de premiers éléments de fixation (2) qui coopèrent avec des premiers moyens de réception dudit caisson (4) et un bord inférieur (15), équipé de seconds éléments de fixation (3) qui coopèrent avec des seconds moyens de réception (5) du caisson (4), **caractérisé en ce que** les seconds éléments de fixation (3) du panneau et les seconds moyens de réception (5) du caisson (4) forment, en outre, des moyens d'indexation en partie basse, de manière à caler, lors de son montage ledit panneau de garniture (1), en position sur ledit caisson (4).

2. Agencement selon la revendication 1, **caractérisé en ce que** l'indexage s'effectue au niveau desdits seconds moyens de réception (5) dudit caisson (4).

3. Agencement selon la revendication 1 ou 2, **caractérisé en ce que** lesdits seconds moyens de réception dudit caisson comportent :
- un élément formant cheville (5), qui comporte un corps (51), sensiblement tubulaire, qui est muni d'un alésage interne longitudinal, qui comporte à sa première extrémité une tête (52), qui entoure la section transversale dudit alésage, et qui est inséré dans une ouverture, ménagée (41) dans ladite première face dudit caisson (4), **en ce que** ladite tête (52) prend appui au niveau des bords de ladite ouverture (41) et dépasse dudit caisson (4), en direction dudit panneau (1) ;
et **en ce que** lesdits seconds éléments de fixation (3) dudit panneau de garniture (1) comportent :
- un capuchon (61), sensiblement tubulaire, disposé sur ladite face de fixation (11) et qui est emboîté sur ladite tête (52) dudit élément formant cheville (5) ; et
- un élément de liaison (63) qui traverse ledit panneau de garniture (1) et coopère avec ledit alésage dudit élément formant cheville (5).

4. Agencement selon l'une quelconque des revendications 1 à 3, **caractérisée en ce qu'**un film d'étanchéité (8) recouvre le caisson (4), excepté une zone basse, située au niveau du bord inférieur dudit caisson (4) et **en ce que** lesdits seconds moyens de réception (5) dudit caisson (4) sont disposés dans ladite zone basse.

5. Agencement selon l'une quelconque des revendications 1 à 4, **caractérisé en ce que** lesdits premiers moyens de réception du caisson comportent des ouvertures et **en ce que** lesdits premiers éléments de fixation dudit panneau de garniture (1) sont clippés dans lesdites ouvertures.

## Claims

1. Arrangement of a trim panel (1) on a motor vehicle door caisson (4), wherein said panel (1) has a securing face (11), which is secured to said caisson (4) and has two side edges (13, 14), equipped with first securing elements (2) which engage with first accommodating means of said caisson (4), and a lower edge (15), equipped with second securing elements (3) which engage with second accommodating means (5) of the caisson (4), **characterized in that** the second securing elements (3) of the panel and the second accommodating means (5) of the caisson (4) furthermore form bottom part indexing means such that, while said trim panel (1) is being fitted, it is locked in position on said caisson (4).

2. Arrangement according to Claim 1, **characterized in that** the indexing is carried out at said second accommodating means (5) of said caisson (4).

3. Arrangement according to Claim 1 or 2, **characterized in that** said second accommodating means of said caisson comprise:
- an element forming a peg (5), which comprises an essentially tubular body (51) provided with a longitudinal internal bore, which has at its first end a head (52) which surrounds the cross section of said bore, and which is inserted into an opening (41) formed in said first face of said caisson (4), **in that** said head (52) is supported at the edges of said opening (41) and juts out from said caisson (4) in the direction of said panel (1);
and **in that** said second securing elements (3) of said trim panel (1) comprise:
- an essentially tubular cap (61) which is located on said securing face (11) and is fitted on said head (52) of said element forming a peg (5); and
- a linking element (63) which passes through said trim panel (1) and engages with said bore of said element forming a peg (5).

4. Arrangement according to any one of Claims 1 to 3, **characterized in that** a sealing film (8) covers the caisson (4), except for a bottom region situated at the lower edge of said caisson (4), and **in that** said second accommodating means (5) of said caisson (4) are located in said bottom region.

5. Arrangement according to any one of Claims 1 to 4, **characterized in that** said first accommodating means of the caisson comprise openings, and **in that** said first securing elements of said trim panel (1) are clipped into said openings.

## Patentansprüche

1. Anordnung einer Verkleidungstafel (1) an einem Kraftfahrzeug-Türgehäuse (4), wobei die Tafel (1) eine Befestigungsfläche (11) aufweist, die an dem Gehäuse (4) befestigt ist und zwei Seitenkanten (13, 14), die mit ersten Befestigungselementen (2) versehen sind, die mit ersten Aufnahmemitteln des Gehäuses (4) zusammenwirken, und eine Unterkante (15), die mit zweiten Befestigungsmitteln (3) ausgerüstet ist, die mit zweiten Aufnahmemitteln (5) des Gehäuses (4) zusammenwirken, aufweist, **dadurch gekennzeichnet, dass** die zweiten Befestigungselemente (3) der Tafel und die zweiten Aufnahmemittel (5) des Gehäuses (4) außerdem im unteren Teil Indexierungsmittel bilden, derart, dass die Verkleidungstafel (1) bei ihrer Montage an ihrer Position am Gehäuse (4) verkeilt wird.

2. Anordnung nach Anspruch 1, **dadurch gekennzeichnet, dass** die Indexierung auf Höhe der zweiten Aufnahmemittel (5) des Gehäuses (4) erfolgt.

3. Anordnung nach Anspruch 1 oder 2, **dadurch gekennzeichnet, dass** die zweiten Aufnahmemittel des Gehäuses enthalten:
- ein einen Zapfen (5) bildendes Element, das einen Körper (51) aufweist, der im Wesentlichen rohrförmig ist und mit einem longitudinalen Innengewinde versehen ist und an seinem ersten Ende einen Kopf (52) aufweist, der den transversalen Querschnitt des Gewindes umgibt, und in eine Öffnung (41) eingesetzt ist, die in der ersten Fläche des Gehäuses (4) ausgebildet ist, wobei sich der Kopf (52) auf Höhe der Ränder der Öffnung (41) abstützt und das Gehäuse (4) in Richtung der Tafel (1) überragt;
und dass die zweiten Befestigungsmittel (3) der Verkleidungstafel (1) enthalten:
- eine im Wesentlichen rohrförmige Schutzkappe (61), die an der Befestigungsfläche (11) angeordnet ist und über den Kopf (52) des einen Zapfen (5) bildenden Elements gezogen ist; und
- ein Verbindungselement (63), das durch die Verkleidungstafel (1) verläuft und mit dem Gewinde des einen Zapfen (5) bildenden Elements zusammenwirkt.

4. Anordnung nach einem der Ansprüche 1 bis 3, **dadurch gekennzeichnet, dass** eine dünne Abdichtschicht (8) das Gehäuse (4) mit Ausnahme einer unteren Zone abdeckt, die sich auf Höhe der Unterkante des Gehäuses (4) befindet, und dass die zweiten Aufnahmemittel (5) des Gehäuses (4) in der unteren Zone angeordnet sind.

5. Anordnung nach einem der Ansprüche 1 bis 4, **dadurch gekennzeichnet, dass** die ersten Aufnahmemittel des Gehäuses Öffnungen aufweisen und dass die ersten Befestigungselemente der Verkleidungstafel (1) in die Öffnungen eingerastet sind.
